# EUROPÄISCHE PATENTSCHRIFT

(11) **EP 3 450 282 B1**
(45) Veröffentlichungstag und Bekanntmachung des Hinweises auf die Patenterteilung: **23.09.2020**
(21) Anmeldenummer: 18185581.8
(22) Anmeldetag: 25.07.2018
(51) Int. Cl.: B62B 9/00, B62K 27/00

(54) **FAHRRADANHÄNGER MIT SCHUTZELEMENT**
TRAILER FOR BICYCLES WITH PROTECTION ELEMENT
REMORQUE DE BICYCLETTE À ÉLÉMENT DE PROTECTION

(30) Priorität: 28.08.2017 DE 102017119626
(43) Veröffentlichungstag der Anmeldung: 06.03.2019
(73) Patentinhaber: Boldt, Julia, 53773 Hennef (DE)
(72) Erfinder: Boldt, Nikolai, 53567 Buchholz (DE)
(74) Vertreter: Freischem & Partner Patentanwälte mbB

(56) Entgegenhaltungen:
- DE-U1- 29 622 049
- JP-A- 2006 160 135
- US-A- 5 176 395
- US-A- 6 059 301
- US-A1- 2012 300 439

## Beschreibung

Die Erfindung betrifft einen Fahrradanhänger, insbesondere zum Transport von Kindern und Babys.

Zum Schutz vor Stoßeinwirkungen auf seitliche Räder von Fahrradanhängern ist es bekannt, Radabweiser in Fahrzeuglängsrichtung vor den Rädern eines Fahrradanhängers vorzusehen. Damit wird verhindert, dass ein Reifen während der Fahrt unmittelbar mit anderen Gegenständen kollidiert und beschädigt werden könnte. Radabweiser sind dazu in der Regel mit einer schräg nach außen verlaufenden Ablenkfläche versehen, welche im Falle eines Aufpralls auf einen Gegenstand eine auf den Fahrradanhänger wirkende Seitenkraft - ggf. in Verbindung mit einem Querversatz des Fahrradanhängers - bewirkt.

Aus US 5,176,395 A ist ein Kinderwagen bekannt, welcher auch in einen Fahrradanhänger konvertierbar ist. Der Fahrradanhänger weist einen Rahmen mit einem darin angeordneten Sitz auf. Ausgehend von den jeweiligen Achsen der Hinterräder erstrecken sich an der linken und rechten Seite des Rahmens Radgabeln bis in den oberen Bereich des Rahmens Aus EP 1 398 261 B2 ist ein Fahrradanhänger mit einem als Chassis bezeichneten Rahmen bekannt, an welchem mindestens ein Stoßfänger zum Schutz vorderer und hinterer Ecken angeordnet sein soll. Dieser Stoßfänger soll im Bereich der Höhe einer Radnabe angeordnet sein und erfüllt eine ähnliche Funktion wie die zuvor genannten Radabweiser.

Der Erfindung liegt die Aufgabe zu Grunde einen Fahrradanhänger zur Verfügung zu stellen, mittels welchen die Sicherheit eines sich in dem Fahrradanhänger befindenden Kindes weiter verbessert werden kann.

Diese Aufgabe wird mit den Merkmalen des unabhängigen Anspruchs gelöst. Weitere Vorteile und praktische Ausführungsformen sind in Verbindung mit den abhängigen Ansprüchen beschrieben.

Ein erfindungsgemäßer Fahrradanhänger weist einen Rahmen auf, welcher ein rechtes Rahmenelement und ein linkes Rahmenelement sowie mehrere, das rechte Rahmenelement und das linke Rahmenelement verbindende Querstreben umfasst. Zwischen dem rechten Rahmenelement und dem linken Rahmenelement ist dabei ein Transportraum mit mindestens einem Sitzelement für ein Kind ausgebildet. Unter einem Sitzelement im Sinne der Erfindung sind dabei insbesondere ein in dem Fahrradanhänger angeordneter Sitz oder eine entsprechende Sitzbank - jeweils mit mindestens einer Sitzfläche und mindestens einer Rückenlehne - zu verstehen. In einem oberen Bereich des rechten Rahmenelements und/oder in einem oberen Bereich des linken Rahmenelements ist ein sich in Fahrzeugquerrichtung nach außen erstreckendes Schutzelement vorgesehen. Das Schutzelement ragt gegenüber einer im Bereich des rechten Rahmenelements und/oder linken Rahmenelements verlaufenden Seitenwand hervor, wobei die Seitenwand durch einen Bezug gebildet ist, der zumindest teilweise innerhalb des Rahmens aufgespannt ist und wobei die Materialspannung des Bezuges ausreichend groß gewählt ist, um in Verbindung mit dem nach außen gegenüber dem Seitenrahmenelement herausragenden, und sich auf dem Boden abstützenden Schutzelement zu verhindern, dass der Kopf eines in dem Transportraum befindlichen Kindes in einem umgekippten Zustand des Fahrradanhängers mit dem Boden in Kontakt gerät.

Mit dem Begriff "oberer Bereich" ist in diesem Zusammenhang insbesondere die - in Fahrzeughochrichtung betrachtet - obere Hälfte eines Rahmens eines Fahrradanhängers gemeint, vorzugsweise das obere Drittel oder das obere Viertel. Diese Abschnitte des Rahmens befinden sich in der Regel auch innerhalb der oberen Hälfte des gesamten Fahrzeuges, d.h. des Fahrradanhängers.

Mit Bezug auf das Fahrzeug selbst ist mit "oberer Bereich" insbesondere ein Bereich gemeint, der sich in Fahrzeughochrichtung betrachtet oberhalb der Sitzfläche erstreckt, insbesondere in einem Bereich seitlich neben dem Oberkörper eines bestimmungsgemäß in dem Fahrradanhänger sitzenden Kindes, insbesondere oberhalb der Brust eines solchen Kindes. Dieser Bereich befindet sich stets deutlich oberhalb der Sitzfläche, beispielsweise mindestens 20 cm oberhalb der Sitzfläche, mindestens 25 cm oberhalb der Sitzfläche oder mindestens 30 cm oberhalb der Sitzfläche. Ein oberer Bereich im Sinne der Erfindung befindet sich vorzugsweise zwischen 40 cm und 70 cm oberhalb der Sitzfläche, weiter bevorzugt zwischen 45 cm und 65 cm oberhalb der Sitzfläche und besonders bevorzugt zwischen 50 cm und 60 cm oberhalb der Sitzfläche. In Fahrzeugquerrichtung betrachtet befindet sich das Schutzelement seitlich neben der Sitzfläche, denn während sich die Sitzfläche üblicherweise über einen mittleren Bereich des Fahrzeuges erstreckt, dienen die Rahmenelemente üblicherweise als seitliche Begrenzungselemente der Sitzfläche oder sind sogar beabstandet zu der Sitzfläche weiter außen am Fahrzeug angeordnet.

Das Schutzelement kann einstückig mit dem rechten Rahmenelement und/oder mit dem linken Rahmenelement ausgebildet sein oder alternativ als separates mit dem rechten oder linken Rahmenelement zu verbindendes Teil ausgebildet sein. Es ist ebenfalls möglich, dass das Schutzelement teilweise einstückig ausgebildet und teilweise als separates Element ausgebildet ist.

Vorzugsweise ist sowohl an dem linken Rahmenelement und an dem rechten Rahmenelement ein Schutzelement vorgesehen, d.h. einstückig ausgebildet und/oder als separates Element angeordnet.

Das in dem oberen Bereich des Rahmens vorgesehene Schutzelement hat den Vorteil, dass es den Schutz eines in dem Transportraum sitzenden Kindes erheblich verbessert, insbesondere wenn es zu einem Seitenaufprall und/oder einem seitlichen Umkippen eines Fahrradanhängers kommt.

Aufgrund der sich nach außen erstreckenden Geometrie des Schutzelements wird der "Kontaktbereich" für äußere Kräfte nach außen verlagert und so eine sich in Fahrzeugquerrichtung zur Seite erstreckende seitliche Sicherheitszone geschaffen, die insbesondere dem Schutz des Oberkörpers einschließlich des Kopfes von zu transportierenden Kindern dient. Dazu ist es vorgesehen, dass das Schutzelement gegenüber einer im Bereich des rechten Rahmenelements und/oder linken Rahmenelements verlaufenden Seitenwand des Fahrzeuges hervorragt.

Eine Seitenwand ist durch einen Bezug gebildet, der zumindest teilweise innerhalb des Rahmens aufgespannt ist. Vorzugsweise ist mindestens eine Seitenwand innerhalb des linken Rahmenelements und/oder eine Seitenwand innerhalb des rechten Rahmenelements aufgespannt.

Vorzugsweise ist der Transportraum zumindest teilweise - vorzugsweise vollständig - von einem Bezug umschlossen. Insbesondere erfolgt dies derart, dass der Transportraum zumindest in Fahrzeugquerrichtung, in Fahrzeuglängsrichtung sowie von oben und von unten von einem Bezug umgeben ist.

Als Bezug dient ein dünnes Textil- und/oder Folienerzeugnis, wie z.B. ein Stoff mit oder ohne transparenten Sichtfenstern in Form von Folien. Üblicherweise handelt es sich dabei um zumindest teilweise elastische Elemente, die im Falle eines Seitenaufpralls und/oder seitlichen Umkippens des Fahrzeuges ein Ausbauchen gegenüber dem jeweiligen seitlichen Rahmenelement nach außen ermöglichen.

Mit dem Schutzelement kann - insbesondere abhängig von Material und Auslegung der Seitenwand, insbesondere eines die Seitenwand bildenden Bezugs, sowie der sich in Fahrzeugquerrichtung erstreckenden Breite des Schutzelements - vollständig oder zumindest teilweise verhindert werden, dass der Kopf und/oder die Schulter eines in dem Fahrzeug sitzenden Kindes im Falle eines seitlichen Umkippens des Fahrradanhängers aufgrund einer sich ausbauchenden Seitenwand mit dem Boden in Kontakt gerät. Die Sicherheit von zu transportierenden Kindern kann so deutlich verbessert werden.

Besonders vorteilhaft ist die Wirkung eines solchen Schutzelements, wenn es sich um ein Fahrzeug für zwei Kinder handelt, die nebeneinander sitzen können und das Fahrzeug mit zwei Kindern besetzt ist. Denn in diesem Fall ist aufgrund einer außermittigen Sitzposition der Kinder nahe der seitlichen Rahmenelemente die Gefahr besonders groß, dass der Kopf und/oder die äußere Schulter bei einem seitlichen Umkippen in Berührung mit dem Boden gelangt.

Vorzugsweise ist das Schutzelement in Verbindung mit an dem Rahmenelementen angeordneten, aufgespannten Seitenwänden derart ausgelegt, dass im Falle eines auf der Seite auf einem Schutzelement aufliegenden Fahrzeuges bei vollständiger Einwirkung der nicht von einem Gurt aufgenommenen Gewichtskraft eines in dem Fahrzeug sitzenden, angeschnallten Kindes (welches das maximal zulässige Gewicht aufweist), die ausbauchenden Seitenwände nicht den Boden berühren. Besonders bevorzugt ist es, wenn die Seitenwand und das Schutzelement so ausgelegt sind, dass die Gewichtskraft eines Kindes mit Maximalgewicht - und weiter bevorzugt ein mehrfaches dieser Gewichtskraft - auch im nicht angeschnallten Zustand des Kinders vollständig von der Seitenwand aufgenommen wird, d.h. sich die Seitenwand nur so weit ausbaucht, dass der Boden nicht berührt wird.

Vorteile ergeben sich aber auch bereits dann, wenn die maximale Gewichtskraft teilweise aufgenommen werden kann, wenn berücksichtigt wird, dass Kinder in solchen Fahrzeugen in der Regel angeschnallt sind und somit nicht nur die seitliche maximale "Auslenkung" durch den Anschnallgurt begrenzt ist, sondern auch die entstehenden Kräfte teilweise von dem Anschnallgurt aufgenommen werden.

Durch ein - teilweise oder vollständig - als separates Element ausgebildetes Schutzelement kann die Breite eines Fahrradanhängers bedarfsweise durch Abnehmen des Schutzelements verringert werden, insbesondere für einen Transport des Fahrzeuges in einem zusammengeklappten Zustand oder zum Passieren von Engstellen. Auch das Falt- und Packmaß für den Versand von einer Produktionsstätte zu Vertriebspunkten und zum Endkunden kann so klein gehalten werden. Schließlich wird noch auf die Möglichkeit verwiesen, bereits hergestellte und ggf. in Benutzung befindliche Fahrzeuge mit derartigen Schutzelementen nachzurüsten.

In einer praktischen Ausführungsform eines erfindungsgemäßen Fahrradanhängers weist der Rahmen einen sich überwiegend in Fahrzeuglängsrichtung und in Fahrzeughochrichtung ersteckenden, geschlossenen rechten Seitenrahmen und einen sich überwiegend in Fahrzeuglängsrichtung und in Fahrzeughochrichtung erstreckenden, geschlossenen linken Seitenrahmen auf. Insbesondere bilden ein oder mehrere linke Rahmenelemente den linken geschlossenen Seitenrahmen und ein oder mehrere rechte Rahmenelemente den rechten geschlossenen Seitenrahmen. Das mindestens eine Schutzelement ist dann in einem den Transportraum in einem oberen Bereich begrenzenden Abschnitt des linken Seitenrahmens und/oder in einem den Transportraum in einem oberen Bereich des rechten Seitenrahmens begrenzenden Abschnitt angeordnet. Auch in diesem Zusammenhang ist mit dem "oberen Bereich" insbesondere die obere Hälfte des Transportraumes gemeint, vorzugsweise das obere Drittel oder das obere Viertel des Transportraumes.

Der linke Seitenrahmen und der rechte Seitenrahmen sind vorzugsweise jeweils geschlossene Seitenrahmen, die den Transportraum - in Fahrzeugquerrichtung aus betrachtet zu einem Großteil - oder vollständig - überdecken und insoweit jeweils seitlich "umgeben". Damit ist der Transportraum durch die geschlossenen Seitenrahmen vollständig oder zumindest überwiegend wirksam geschützt. Die geschlossenen Seitenrahmen verleihen dem Rahmen auch eine hohe Biege- und Torsionssteifigkeit.

Innerhalb der geschlossenen Seitenrahmen ist vorzugsweise jeweils über mindestens einen Teil ihrer Höhe und/oder ihrer Breite mindestens ein Bezug derart aufgespannt, dass eine Seitenwand gebildet ist. Insbesondere erstreckt sich der Bezug über mindestens 50% der Höhe und/oder Länge eines geschlossenen Seitenrahmens, besonders bevorzugt über mindestens 75% und weiter bevorzugt über die gesamte Höhe und/oder Länge eines geschlossenen Seitenrahmens.

Das Schutzelement ist vorzugsweise - in Fahrzeuglängsrichtung betrachtet - auf Höhe eines im Transportraum angeordneten Sitzelements (d.h. seitlich neben einer Sitzfläche oder Rückenlehne) und/oder in einem - in Fahrzeuglängsrichtung betrachtet - mittleren Abschnitt des Fahrzeugs vorgesehen.

Unabhängig oder in Ergänzung dazu ist das Schutzelement vorzugsweise in einem sich überwiegend in Fahrzeuglängsrichtung erstreckenden Abschnitt des Seitenrahmens vorgesehen, beispielsweise an einem rohrartig ausgebildeten Element, das zumindest teilweise oder überwiegend in Fahrzeuglängsrichtung orientiert ist. Die genannten "Abschnitte" bzw. "Bereiche", in denen das Schutzelement vorgesehen ist, befinden sich bei Fahrradanhängern insbesondere seitlich neben oder oberhalb des Kopfes eines Kindes, das sitzend in dem Fahrradanhänger transportiert wird.

In einer weiteren praktischen Ausführungsform ragt das Schutzelement in Fahrzeughochrichtung betrachtet gegenüber dem linken Rahmenelement und/oder gegenüber dem rechten Rahmenelement des Fahrradanhängers hervor. Damit kann das Schutzelement auch als seitlicher zusätzlicher Überrollschutz dienen und so eine sich gegenüber den seitlichen Rahmenelementen in Fahrzeughochrichtung nach oben erstreckende obere Sicherheitszone bilden, falls es zu einem Überschlag des Fahrradanhängers bei einem Unfall oder unsachgemäßer Verwendung kommt und insbesondere falls das Fahrzeug auf die Oberseite gedreht, d.h. mit dem "Dach" nach unten, liegenbleibt. In diesem Fall kann mit Hilfe des Schutzelements auch im Falle eines auf dem "Dach" liegenden Fahrradanhängers ein zusätzlicher Abstand zwischen dem Kopf eines Kindes und dem Boden geschaffen werden. Dies kann ebenfalls derart realisiert sein, dass eine gespannte Stofflage im Bereich des Dachs - analog zur vorstehenden Beschreibung, d.h. ggf. auch unter Gewichtsbelastung - vom Boden beabstandet bleibt.

Das Schutzelement weist insbesondere an einer zur Außenseite des Fahrzeuges gerichteten Seite - d.h. auf einer von dem Transportbereich beabstandeten Seite - eine sich überwiegend in Fahrzeuglängsrichtung und in Fahrzeughochrichtung erstreckende Abstützfläche auf. Eine solche Abstützfläche ist insbesondere derart orientiert, dass bei einem seitlichen Umkippen und Aufliegen des Fahrradanhängers auf dem Schutzelement ein größerer Anteil der Gesamtkräfte - flächig - über die Abstützfläche aufgenommen wird, insbesondere mindestens 20 Prozent, mindestens 50 Prozent oder auch mindestens 80 Prozent, 90 Prozent der Gesamtkräfte oder mehr. Durch eine Fläche von mindestens 4 cm² - vorzugsweise mindestens 8 cm² und weiter vorzugsweise mindestens 12 oder mindestens 20 cm² - kann eine Abstützfläche bereits gestellt werden, die kostengünstig und mit nur geringem Gewicht aus Kunststoff hergestellt werden kann und ausreichend tragfähig ist. Besonders geeignet erscheinen Abstützflächen mit einer sich in Fahrzeughochrichtung erstreckenden Höhe von mindestens 2 cm, vorzugsweise mindestens 3 cm oder mindestens 4 cm und einer sich in Fahrzeuglängsrichtung erstreckenden Länge von mindestens 4 cm vorzugsweise mindestens 6 cm und weiter vorzugsweise mindestens 10 cm.

Die Sicherheit eines erfindungsgemäßen Fahrradanhängers mit mindestens einem daran vorgesehen Schutzelement kann weiter erhöht werden, wenn in dem Schutzelement mindestens ein Leuchtmittel angeordnet ist. Insbesondere kann das Leuchtmittel in Fahrzeuglängsrichtung nach vorne, nach hinten, nach oben, nach unten und/oder zur Seite nach außen oder nach innen gerichtet sein. Das Schutzelement mit dem mindestens einen Leuchtmittel kann insbesondere derart ausgerichtet sein, dass ein nach vorne und/oder hinten abstrahlendes Licht einen Abstrahlwinkel von mindestens 90°, bevorzugt mindestens 100° und weiter bevorzugt mindestens 110° aufweist. Bei dem nach hinten strahlenden Licht handelt es sich insbesondere um rotes Licht (Rücklicht). Nach vorne abstrahlendes Licht kann insbesondere weißes Licht sein und als Scheinwerfer bzw. Frontlicht (Vorderlicht) dienen.

Unabhängig von dem Leuchtmittel wird darauf verwiesen, dass vorzugsweise mindestens zwei Schutzelemente an dem Fahrzeug angeordnet sind, jeweils mindestens ein linkes an dem linken Rahmenelement und mindestens ein rechtes an dem rechten Rahmenelement.

Die Schutzelemente und das darin angeordnete mindestens eine Leuchtmittel (oder mehrere Leuchtmittel) sind vorzugsweise derart an dem Fahrradanhänger angeordnet und ausgerichtet, dass stets mindestens ein Leuchtmittel aus einer Position hinter dem Fahrradanhänger zumindest teilweise sichtbar ist. Durch die seitliche Anordnung des Schutzelements an dem Fahrradanhänger ist bei aktivierten Leuchtmitteln und bei gleichzeitiger Sichtbarkeit beider Leuchtmittel die Breite des Fahrradanhängers auch im Dunkel gut ersichtlich.

Als Leuchtmittel ist vorzugsweise ein aktives Leuchtmittel vorgesehen, z.B. eine LED/Halogen- oder Glühlampe, die mit entsprechender Energie versorgt werden muss. Alternativ oder in Ergänzung dazu können auch passive Leuchtmittel vorgesehen sein, z.B. ein Reflektor.

Die Leuchtmittel sind - zumindest teilweise - vorzugsweise geschützt angeordnet, insbesondere derart, dass sie gegenüber einer jeweiligen Außenseite des Schutzelements zurückversetzt und somit vor direkter mechanischer Beschädigung bei Stoßeinwirkungen mit Wänden, Pollern, anderen Fahrzeugen und sonstigen Hindernissen geschützt sind. Eine solche geschützte Anordnung ist bei einer Anordnung im Bereich der nach vorne in Fahrtrichtung weisenden Vorderseite von besonderer Bedeutung, weil es auf dieser Seite erfahrungsgemäß am häufigsten zu Stoßeinwirkungen kommt, insbesondere wenn die Breite des Fahrzeugs von einem Fahrradfahrer oder einer das Fahrzeug anders bewegenden Person falsch eingeschätzt wurde. Bei aktiver Beleuchtung ist vorzugsweise auch mindestens ein Energiespeicher in dem Schutzelement angeordnet, insbesondere eine Batterie oder mehrere Batterien oder ein Akkumulator.

Funktional mit weiteren Vorteilen verbunden ist es, wenn das Schutzelement zumindest teilweise durch ein separates Element mit einem Grundkörper gebildet ist, wobei das Schutzelement mit dem rechten Rahmenelement - insbesondere einem rechten Seitenrahmen - und/oder mit dem linken Rahmenelement - insbesondere einem linken Seitenrahmen - verbindbar ist. Ein solcher Grundkörper kann insbesondere ein- oder mehrteilig aus Kunststoff hergestellt sein.

Das Schutzelement kann - auch unabhängig davon, ob es als separates Element ausgebildet oder aus Kunststoff hergestellt ist - ein oder mehrere Hohlräume zur Aufnahme mindestens eines Leuchtmittels und/oder eines Energiespeichers aufweisen.

Besondere Vorteile ergeben sich, wenn ein Leuchtmittel innerhalb des Schutzelements angeordnet ist und das Schutzelement derart ausgebildet ist, dass das eine Leuchtmittel für zwei oder mehr Funktionen genutzt wird, beispielsweise als Frontlicht und/oder als Rücklicht und/oder als ein Seitenlicht und/oder als ein eine Seitenwand des Fahrradanhängers vollständig oder teilweise anstrahlendes Licht.

Die Verbindung eines separat ausgebildeten Schutzelements mit einem Rahmenelement erfolgt bevorzugt mittels einer Schnellkupplung, um ein Abnehmen und Mitnehmen des Schutzelements zu ermöglichen. Elemente der Schnellkupplung können an den Rahmenelementen, am Grundkörper und/oder an weiteren Elementen vorgesehen sein, beispielsweise an einem separat mit einem Rahmenelement zu verbindenden Adapterelement, das mit dem Grundkörper des Schutzelements zusammenwirkt.

Eine Schnellkupplung ist weiter bevorzugt derart ausgebildet, dass eine werkzeuglose Bedienung ermöglicht ist. Eine entsprechende Verbindung zwischen Schutzelement und Fahrzeug kann dann innerhalb kürzester Zeit (innerhalb von Sekundenbruchteilen oder innerhalb von nur wenigen Sekunden) mit einem oder wenigen Handgriffen hergestellt und wieder gelöst werden. Als Beispiele für Schnellkupplungen wird exemplarisch auf Rastverbindungen und auf Schnellspanner verwiesen.

Ein als abnehmbares, separates Element mit mindestens einem aktiven Leuchtmittel versehenes Schutzelement kann im abgenommenen Zustand vorteilhaft auch als Taschenlampe genutzt werden.

In einer weiteren praktischen Ausführungsform ist mindestens ein Leuchtmittel und/oder mindestens ein Energiespeicher für ein Leuchtmittel herausnehmbar in einem Hohlraum des Schutzelements angeordnet. Insbesondere sind das Leuchtmittel und/oder der Energiespeicher entnehmbar, bevorzugt werkzeugfrei entnehmbar.

Das Leuchtmittel und/oder der Energiespeicher können dann zur separaten Verwendung und/oder zum Aufladen vollständig aus dem Hohlraum entnommen werden. Das Schutzelement kann dazu einen einteiligen, zweiteiligen oder mehrteilig ausgebildeten Grundkörper mit geeigneten Öffnungen aufweisen. Falls der Grundkörper mehrere Teile umfasst, sind diese vorzugsweise mittels einer Clipverbindung, Schraubverbindung, Steckverbindung und/oder auf sonstige geeignete Art und Weise miteinander verbunden oder verbindbar. Als für die Herstellung und Montage besonders geeignet hat es sich heraus gestellt, wenn der Grundkörper durch eine Oberschale und eine Unterschale aus zwei Hauptteilen gebildet ist.

Alternativ oder in Ergänzung zu Vorstehendem kann an dem Schutzelement und/oder an einem in den Hohlraum des Schutzelements bzw. Grundkörpers eingesetzten Leuchtmittel und/oder Energiespeicher eine Schnittstelle zum elektrischen Aufladen einer funktional mit dem Leuchtmittel verbundenen Energiequelle ausgebildet sein. Dabei kann es sich beispielsweise um eine USB-Schnittstelle, Mini-USB-Schnittstelle oder Mikro-USB-Schnittstelle handeln. In diesem Zusammenhang wird insbesondere darauf verwiesen, dass ein separat hergestelltes und mit dem Fahrzeug verbundenes Schutzelement, insbesondere wenn es mittels einer Schnellkupplung verbunden ist, jederzeit bequem von dem Fahrradanhänger separierbar ist und die Energiequelle mittels eines Kabels an einem Gerät mit USB-Anschluss oder einer USB-Steckdose aufgeladen werden kann.

Wenn das Schutzelement gegenüber einem Rahmenelement seitlich nach außen und nach oben so weit hervorragend angeordnet ist, dass es zumindest teilweise gegenüber einer Deckfläche des Transportbereichs hervorragt, ist eine Abstrahlung der Lichtquelle zur Mitte hin ohne Verdeckung durch das Rahmenelement oder eine Deckfläche möglich. In diesem Fall kann der Fahrradanhänger besonders gut mittels aktiven und/oder passiven Leuchtmitteln in der Dunkelheit - und aus verschiedenen Perspektiven - sichtbar gemacht werden.

Die Erfindung betrifft auch ein Schutzelement für einen Fahrradanhänger mit einem Grundkörper sowie Mitteln zur Befestigung an einem seitlichen Rahmenelement eines Fahrradanhängers. Dabei ist in dem Schutzelement mindestens ein Leuchtmittel derart angeordnet, dass Licht von dem Schutzelement abgestrahlt werden kann. Ein derartiges Schutzelement kann dabei in zweifacher Hinsicht zur Verbesserung der Sicherheit eines in dem Fahrradanhänger transportierten Kindes dienen. Zum einen dient das Schutzelement als seitlicher Aufprallschutz und zum anderen wird durch die Beleuchtung die Sichtbarkeit des Fahrradanhängers für andere Verkehrsteilnehmer verbessert.

Besonders flexibel lässt sich das erfindungsgemäße Schutzelement montieren, wenn an dem Grundkörper des Schutzelements eine Schnellkupplung ausgebildet ist. Mittels einer Schnellkupplung, beispielweise in Form einer Rastverbindung oder eines Schnellspanners, kann das Schutzelement besonders schnell und werkzeugfrei an dem Fahrradanhänger montiert und wieder demontiert werden.

Weitere praktische Ausführungsformen und Vorteile der Erfindung sind nachfolgend im Zusammenhang mit den Zeichnungen beschrieben. Es zeigen:
- Fig. 1: den Rahmen eines erfindungsgemäßen Fahrradanhängers mit nur einem Schutzelement und mit Schiebegriff in einer perspektivischen Ansicht von schräg vorne,
- Fig. 2: den Fahrradanhänger aus Fig. 1 in einer Ansicht von vorne,
- Fig. 3: den Fahrradanhänger aus Fig. 1 und Fig. 2 ohne Schiebegriff mit zwei Schutzelementen in einer Ansicht von oben.
- Fig. 4: den Fahrradanhänger aus den Fig. 1 und 2 mit zwei Schutzelementen und zwei darin sitzenden Kindern in einem aufrechten Zustand in einer Ansicht von vorne,
- Fig. 5: den Fahrradanhänger aus Fig. 4 in einem umgekippten Zustand in einer Ansicht von vorne,
- Fig. 6: nur das Schutzelement aus den Fig. 1 bis 5 in einer perspektivischen Ansicht von schräg vorne,
- Fig. 7: das Schutzelement aus Fig. 6 in einer Ansicht von der Seite gemäß Pfeil V in Fig. 6,
- Fig. 8: das Schutzelement aus Fig. 6 und 7 in einer Ansicht von hinten, und
- Fig. 9: das Schutzelement aus Fig. 6 bis 8 in einer Ansicht von oben.

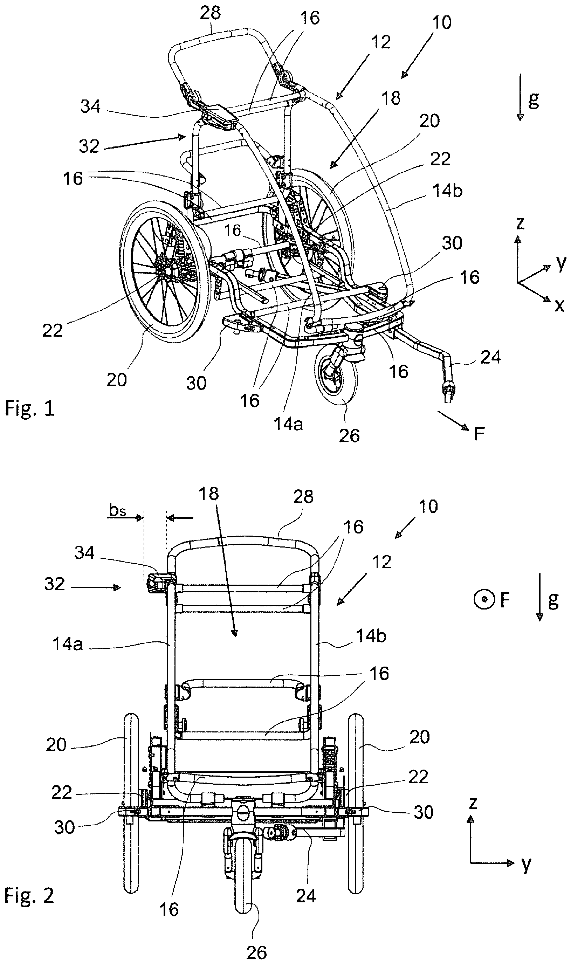

In den Fig. 1 bis 5 ist ein Rahmen eines Fahrradanhängers 10 dargestellt. Der gezeigte Fahrradanhänger 10 kann ebenfalls als Kinderwagen genutzt werden. Die Fahrtrichtung des Fahrradanhängers 10 ist mit einem Pfeil F gekennzeichnet. Die Längsrichtung des Fahrradanhängers (Fahrzeuglängsrichtung) ist mit x, die Querrichtung (Fahrzeugquerrichtung) mit y und die Hochrichtung (Fahrzeughochrichtung) mit z gekennzeichnet. Ferner ist in den Fig. 1,2, 4 und 5 jeweils die Wirkrichtung der Gewichtskraft mit einem Pfeil g eingezeichnet.

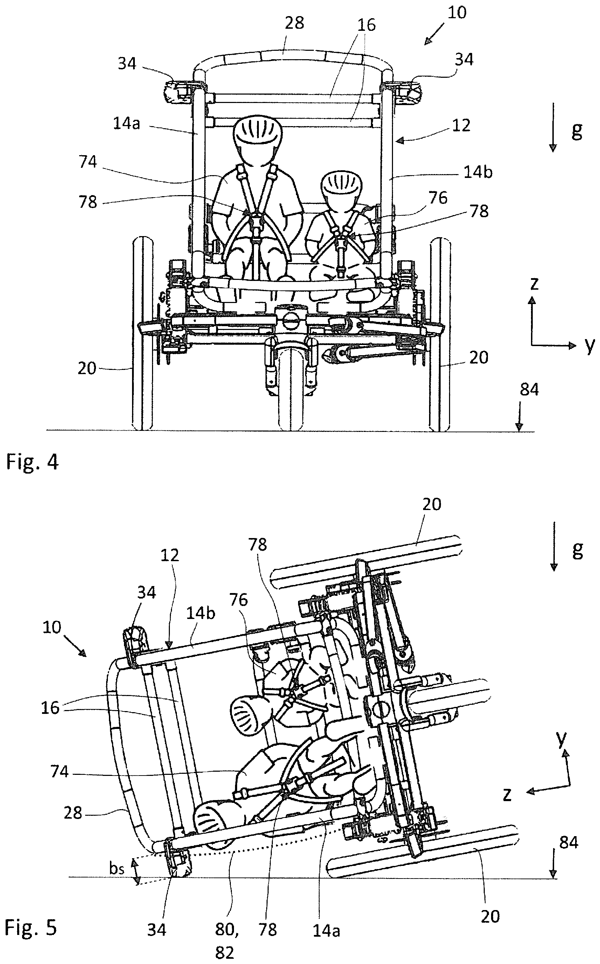

Der Fahrradanhänger 10 umfasst einen Rahmen 12 mit einem rechten geschlossenen Seitenrahmen 14a und einem linken geschlossenen Seitenrahmen 14b, wobei zwischen den Seitenrahmen 14a, 14b mehrere Querstreben 16 angeordnet sind. Zwischen dem rechten Seitenrahmen 14a und dem linken Seitenrahmen 14b ist ein Transportraum 18 für ein Kind ausgebildet. In dem Transportraum ist üblicherweise mindestens ein Sitzelement (nicht dargestellt) für ein Kind angeordnet, beispielswiese ein Sitzelement in Form eine Sitzes oder eine Sitzbank für zwei Kinder. In den Fig. 4 und 5 ist ein Fahrradanhänger 10 mit zwei darin sitzenden Kindern dargestellt. Derartige Sitzelemente umfassen mindestens eine Sitzfläche (nicht dargestellt) und eine Rückenlehne (ebenfalls nicht dargestellt). Diese Sitzfläche befindet sich üblicherweise - in Fahrzeuglängsrichtung betrachtet - in einem mittleren oder hinteren Bereich des Fahrradanhängers, beispielsweise auf Höhe von Rad-Anbindungsstellen 22 für seitliche Räder 20 oder in einem Bereich davor.

Die seitlichen Räder 20 sind jeweils über entsprechende Rad-Anbindungsstellen 22 an dem linken Seitenrahmen 14b und an dem rechten Seitenrahmen 14a angebunden.

Vorliegend ist an der Vorderseite des Fahrradanhängers 10 eine Deichsel 24 befestigt, welche für die Verwendung als Fahrradanhänger 10 benötigt wird und zur Befestigung an einem Fahrrad (nicht dargestellt) vorgesehen ist. Die Deichsel 24 kann demontiert werden, um den gezeigten Fahrradanhänger 10 als Kinderwagen nutzen zu können. Für die Nutzung als Kinderwagen dient auch das zusätzliche Buggyrad 26. Das Buggyrad 26 ist ebenfalls abnehmbar und wird für die Verwendung als Fahrradanhänger üblicherweise entfernt oder zumindest "deaktiviert". Der Fahrradanhänger 10 weist - vor allem für die Nutzung als Kinderwagen - rückseitig einen Schiebegriff 28 auf.

Wie in Fig. 1 und 2 gut zu erkennen ist, ist in einem unteren Bereich, in Fahrzeuglängsrichtung betrachtet etwa auf Höhe der Rad-Anbindungsstellen 22, jeweils ein seitlich gegenüber den Seitenrahmen 14a, 14b hervorragender Radabweiser 30 an den Seitenrahmen 14a, 14b angeordnet. Diese Radabweiser sind schützend unmittelbar vor den Rädern 20 angeordnet und verhindern so eine unmittelbare Kollision der Räder 20 mit anderen Gegenständen.

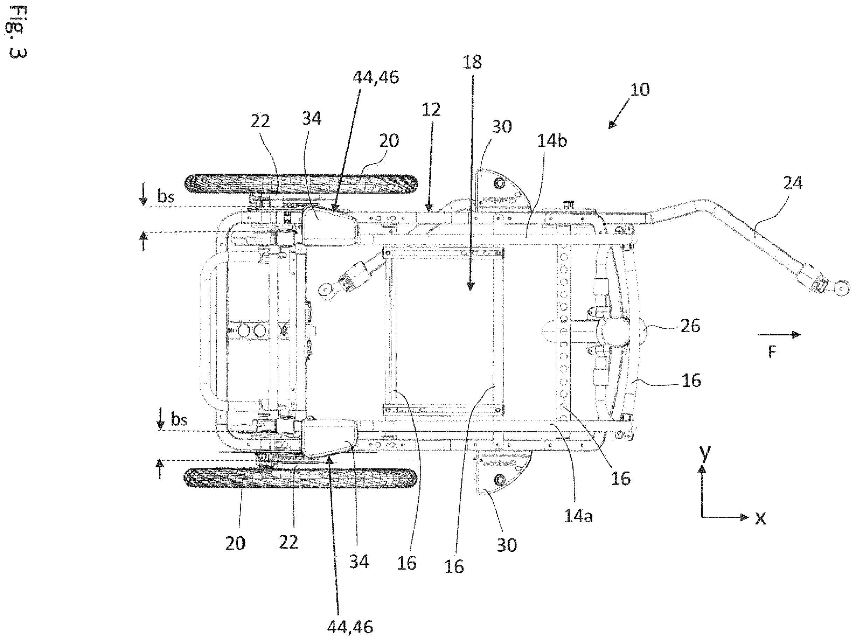

Der Fahrradanhänger 10 weist zudem in einem oberen Bereich 32 des Rahmens 12 bzw. der Seitenrahmen 14a, 14b - in Fahrzeughochrichtung betrachtet in einem deutlichen Abstand gegenüber der nicht dargestellten Sitzfläche - ein seitlich gegenüber dem rechten Seitenrahmen 14a hervorragendes Schutzelement 34 auf. In der in Fig. 1 und 2 gezeigten Ausführungsform ist exemplarisch nur ein solches Schutzelement 34 auf der in Fahrtrichtung betrachtet rechten Seite des Rahmens 12 dargestellt. In der Praxis wird sinnvollerweise - wie in Fig. 3 dargestellt - auf der linken Seite des Rahmens 12 in analoger Weise ein weiteres Schutzelement 34 angeordnet, um die vorstehend erläuterten Schutzwirkungen beidseitig des Fahrradanhängers zu erzielen.

Wie insbesondere in den Fig. 1 und 3 gut erkennbar ist, ist das Schutzelement 34 in einem sich überwiegend horizontal und in Fahrzeuglängsrichtung erstreckenden, oberen Bereich 32 des rechten Seitenrahmens 14a angeordnet. Das Schutzelement 34 erstreckt sich hier gegenüber dem Seitenrahmen 14a insbesondere in Fahrzeugquerrichtung um die Breite bs nach außen über das Seitenrahmenelement 14a hinaus (vgl. Fig. 2).

Das Schutzelement 34 dient als Schutz für den Kopf eines Kindes, insbesondere bei einem seitlichen Umkippen oder vollständigen Umkippen des Fahrradanhängers 10, indem es einen zusätzlichen Sicherheitsabstand von dem Kopf des Kindes bis zum Boden und somit eine Sicherheitszone schafft. Das Schutzelement 34 ist hier als separates Teil ausgebildet, welches, wie im Folgenden erläutert werden wird, mit dem jeweils rechten Seitenrahmen 14a oder linken Seitenrahmen 14b verbunden ist.

In Fig. 3 ist ein Fahrradanhänger 10 in einer Ansicht von oben mit zwei Schutzelementen 34 dargestellt. An dem linken Seitenrahmen 14b und an dem rechten Seitenrahmen 14a ist jeweils ein Schutzelement 34 angeordnet. Wie gut zu erkennen ist, ragen die Schutzelemente 34 jeweils seitlich um die Breite bs gegenüber den Seitenrahmen 14a, 14b hervor. In Fahrzeugquerrichtung nach außen orientiert sind jeweils zwei Abstützflächen 44, 46 an den Schutzelementen 34 ausgebildet, die im Folgenden anhand der Fig. 4 bis 7 im Detail erläutert werden.

In Verbindung mit den Fig. 4 und 5 ist die Funktionsweise der Schutzelemente 34 an dem Fahrradanhänger 10 gut erkennbar. In dem Fahrradanhänger 10 sitzen ein erstes Kind 74 und ein zweites Kind 76 nebeneinander in dem Transportraum 18. Das erste Kind 74 und das zweite Kind 76 sind jeweils über ein Gurtsystem 78 angeschnallt und dadurch gegenüber dem Fahrradanhänger 10 fixiert. In der aufrechten Position des Fahrradanhängers (vgl. Fig. 4) sind das erste Kind 74 und das zweite Kind 76 vollständig von dem Rahmen 12 umgeben. In Querrichtung (y-Richtung) sind beide Kinder seitlich von dem rechten Seitenrahmen14a und dem linken Seitenrahmens 14b umgeben.

Der gesamte Rahmen 12 ist von einem - in Fig. 4 nicht erkennbaren - mehrteiligen Bezug 80 umgeben, insbesondere umspannt. In Fig. 5 ist nur eine Seitenwand 82 des Bezuges 80 durch eine gestrichelte Linie 82 angedeutet.

Innerhalb des rechten geschlossenen Seitenrahmens 14a oder um den rechten geschlossenen Seitenrahmen 14a ist eine Seitenwand 82 des Bezuges 80 aufgespannt (vgl. Fig. 5). Analog dazu ist innerhalb des linken Seitenrahmens 14b oder um den linken Seitenrahmen 14b eine linke Seitenwand (nicht dargestellt) aufgespannt. Die Seitenwände stellen eine seitliche Begrenzung des Transportraumes 18 dar. Der Transportraum 18 ist oberseitig, unterseitig, vorderseitig und rückseitig mittels mindestens eines weiteren Bezuges (nicht dargestellt) umschlossen, so dass sich eine Art verschließbare Kabine ergibt. Der Bezug 80 kann zum Einsteigen und/oder zur Erhöhung der Luftzirkulation in dem Transportraum 18 vollständig oder teilweise abgenommen bzw. aufgeklappt werden. An dem Bezug 80 können optional Fensterelemente, insbesondere in Form von transparenten Folien, und/oder Netze vorgesehen sein.

Wenn sich der Bezug 80 auch in einem Bereich zwischen den beiden Seitenrahmen 14a und 14b erstreckt, kann durch den Bezug 80 eine oberseitige Deckfläche, eine Rückwand, eine Frontwand und/oder eine Bodenwand gebildet werden. Der Transportraum 18, in dem die Kinder 74, 76 sitzen, ist dann sowohl in Querrichtung, als auch in Längs- und Hochrichtung vom Bezug 80 umgeben.

In Fig. 5 ist der Fahrradanhänger 10 in einer seitlich umgekippten Position dargestellt. Wie gut zu erkennen ist, liegt der Fahrradanhänger 10 mit dem rechten Rad 20 und dem rechten Schutzelement 34 auf dem Boden 84 auf. Durch die seitliche Lage des Fahrradanhängers 10 verlagert sich die Position des ersten Kindes 74 und des zweiten Kindes 76 schwerkraftbedingt in Richtung der Gewichtskraft g in Richtung Boden 84. Durch das Gurtsystem 78 ist die Bewegung der Kinder 74, 76 zwar beschränkt. Der gegenüber dem Oberkörper bewegliche Kopf ist jedoch besonders gefährdet, weil der Kopf selbst nicht angeschnallt ist. Die Bewegung des Kopfes der Kinder ist daher besonders groß bzw. wird durch ein seitliches Auslenken vergrößert.

Wie in Fig. 5 gut zu erkennen ist, wird durch die Gewichtskraft des ersten Kindes 74 die zum Boden orientierte rechte Seitenwand 82 (durch die gestrichelte Linie angedeutet)in Fahrzeugquerrichtung bogenförmig nach außen gedehnt, so dass die durch die gestrichelte Linie angedeutete bauchige Kontur der rechten Seitenwand 82 entsteht. Die Materialspannung des Bezuges 80 ist ausreichend groß, um in Verbindung mit dem nach außen gegenüber dem rechten Seitenrahmenelement 14a herausragenden, und sich auf dem Boden 84 abstützenden Schutzelement 34 zu verhindern, dass der Kopf des ersten Kindes 74 in diesem umgekippten Zustand des Fahrradanhängers 10 mit dem Boden 84 in Kontakt gerät.

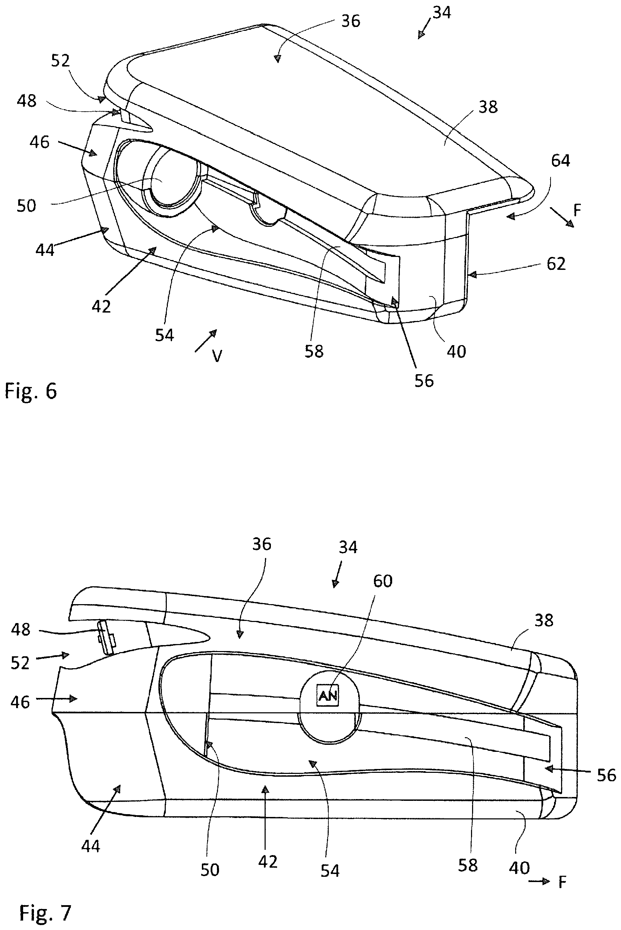

In den Fig. 6 bis 8 ist das Schutzelement 34 separat und mit weiteren Details dargestellt. Das Schutzelement 34 weist einen zweiteiligen Grundkörper 36 mit einer Oberschale 38 und einer Unterschale 40 auf. Das Schutzelement 34 ist hier aus Kunststoff hergestellt.

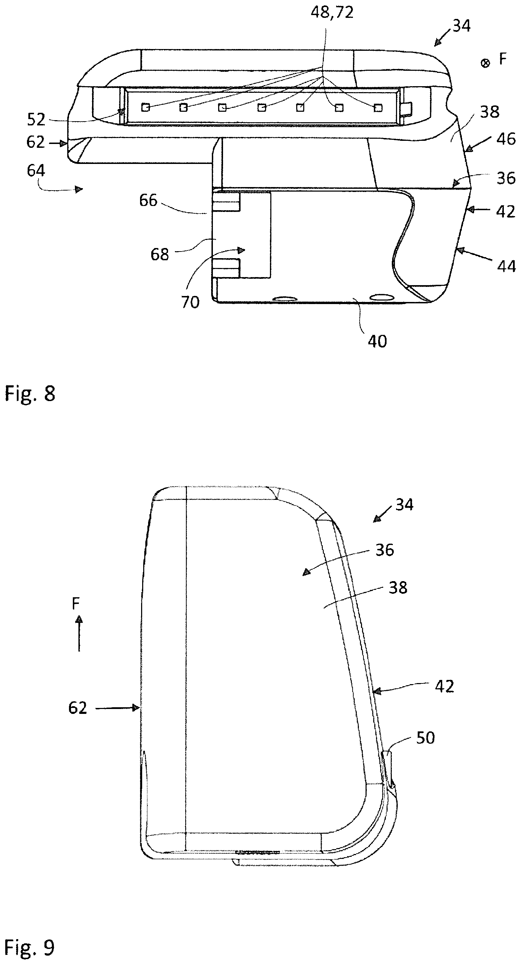

Die dem Rahmen 12 abgewandte in Fahrzeugquerrichtung nach außen weisende Seite 42 ist gegenüber der Fahrzeuglängsrichtung von vorne nach hinten nach außen derart geneigt, dass der Grundkörper 36 in dem am Rahmen 12 montierten Zustand eine von vorne nach hinten (d.h. in der der Fahrtrichtung F entgegen gerichteten Richtung) eine zunehmende Breite aufweist (vgl. Fig. 3 in Verbindung mit Fig. 9).

Die Gesamtbreite des Grundkörpers 36 nimmt von vorne nach hinten (d.h. entgegen der Fahrtrichtung) zu. Wie in Fig. 7 gut erkennbar ist, nimmt die sich in Fahrzeughochrichtung erstreckende Höhe des Grundkörpers 36 von vorne nach hinten (d.h. entgegen der Fahrtrichtung F) ebenfalls zu.

Der Grundkörper 36 weist auf der dem Rahmen abgewandten, in Fahrzeugquerrichtung nach außen weisenden Seite 42 zwei im Wesentlichen eben ausgebildete Abstützflächen 44, 46 auf, eine untere Abstützfläche 44 und eine obere Abstützfläche 46. Die Abstützflächen grenzen unmittelbar aneinander an, wobei die untere Abstützfläche 44 (hier nur geringfügig) nach unten in Richtung Boden geneigt ist und die obere Abstützfläche 46 (hier nur geringfügig) nach oben geneigt ist (vgl. Fig. 8). Anstelle von zwei Abstützflächen 44, 46 können auch mehr Abstützflächen oder nur eine Abstützfläche (nicht dargestellt) vorgesehen sein. Vorteilhaft ist, dass sich der Fahrradanhänger 10 im Falle eines seitlichen Umkippens über eine oder mehrere Abstützflächen 44, 46 abstützen kann, die sich flächig im Wesentlichen in Fahrzeuglängsrichtung und in Fahrzeughochrichtung erstrecken. In Fig. 5 ist gut zu erkennen, dass sich der Fahrradanhänger 10 an der oberen Abstützfläche 46 des Schutzelementes 34 abstützt.

In den Figuren 6 bis 8 ist gut zu erkennen, dass in dem Grundkörper 36 des Schutzelementes 34 zwei Leuchtmittel 48, 50 angeordnet sind. Das erste Leuchtmittel 48 dient zur Abstrahlung von Licht nach hinten (Rücklicht) und das zweite Leuchtmittel 50 zur Abstrahlung von Licht in Fahrtrichtung F nach vorne (Vorderlicht).

Das erste Leuchtmittel 48 (Rücklicht) und das zweite Leuchtmittel 50 (Frontlicht bzw. Scheinwerfer) sind jeweils in einer Vertiefung 52, 54 in dem Grundkörper 36 gegenüber dem das Leuchtmittel 50 umgebenden Grundkörper nach innen versetzt angeordnet, um eine direkte Stoßeinwirkung und entsprechende Beschädigungen zu vermeiden.

Das erste Leuchtmittel 48 (Rücklicht) erstreckt sich vorliegend über einen Großteil der sich in Fahrzeugquerrichtung erstreckende Breite des Grundkörpers 36 und weist eine Vielzahl von LEDs 72 auf. Das erste Leuchtmittel 48 kann aufgrund der seitlich offenen Vertiefung 52 Licht auch zumindest teilweise in Fahrzeugquerrichtung abstrahlen.

Das zweite Leuchtmittel 50 (Vorderlicht) ist - hier auf der im montierten Zustand dem Rahmen 12 abgewandten Seite 42 des Grundkörpers 36 - so angeordnet, dass es Licht in Fahrtrichtung F nach vorne abstrahlen kann. Die Vertiefung 54, in der das zweite Leuchtmittel 50 angeordnet ist, erstreckt sich in Fahrzeuglängsrichtung bis zu einem vorderseitigen Austrittsbereich 56, so dass von dem Leuchtmittel 50 Licht in Fahrtrichtung F nach vorne abgestrahlt werden kann.

Ausgehend von dem zweiten Leuchtmittel 50 ist in dem Bereich zwischen dem Leuchtmittel 50 und dem Austrittsbereich 56 - hier im Wesentlichen über die gesamte verbleibende Länge der Vertiefung 54 - ein Reflektor 58 angeordnet, mittels welchem Licht in Fahrzeugquerrichtung reflektiert wird.

Vorteilhaft ist, dass auch das Licht des Leuchtmittels 50 teilweise von dem Reflektor 58 zur Seite reflektiert und somit abgestrahlt wird.

Der Grundkörper 36 umschließt einen Hohlraum, in welchem ein Energiespeicher angeordnet ist (nicht zu sehen, da von dem Grundkörper verdeckt), welcher das erste Leuchtmittel 48 und das zweite Leuchtmittel 50 mit Strom versorgt.

In Fig. 7 ist auch zu erkennen, dass in der Vertiefung 54 ein Schalter 60 angeordnet ist, mit dem das erste Leuchtmittel 48 und das zweite Leuchtmittel 50 angeschaltet und ausgeschaltet werden können.

Der Grundkörper 36 weist an seiner zu dem Seitenrahmen 14a, 14b gerichteten Seite 62 eine L-förmige Aussparung 64 für den jeweiligen Seitenrahmen 14a, 14b auf. Zur Befestigung des Schutzelements 34 an dem Seitenrahmen 14a, 14b ist eine Schnellkupplung 66 vorgesehen. Die Schnellkupplung 66 umfasst eine Schiene 68, welche auf geeignete Art und Weise (hier nicht dargestellt) an dem jeweiligen Seitenrahmen 14a, 14b befestigt wird, beispielsweise durch geeignete geometrische Ausbildung und festes Verbinden (z.B. Verschrauben) der Schiene 68 mit dem jeweiligen Seitenrahmen 14, 14b. Der Grundkörper 36 weist eine zumindest insoweit komplementär zu der Schiene 68 ausgebildete Ausnehmung 70 auf, dass das Schutzelement 34 mit der Ausnehmung durch Aufschieben nach Art einer Gleitführung und Verrasten (oder eine alternative Verbindungsart) in einfaeher Weise mit dem Seitenrahmen 14a, 14b derart verbindbar ist, dass sich die Anordnung gemäß den Fig. 1 bis 5 ergibt.

Die Erfindung ist nicht auf die beschriebenen Ausführungsformen beschränkt, sondern wird nur durch die Ansprüche definiert. Sie kann im Rahmen der Ansprüche und unter Berücksichtigung der Kenntnisse des zuständigen Fachmanns variiert werden.

Insbesondere wird darauf verwiesen, dass die Verbindung zwischen Schutzelement und Seitenrahmen 14a, 14b auf andere geeignete Art und Weise erfolgen kann, auch unabhängig von Schnellkupplungssystemen.

### Bezugszeichenliste

- 10: Fahrradanhänger
- 12: Rahmen
- 14a, 14b: Seitenrahmen
- 16: Querstreben
- 18: Transportraum
- 20: Rad
- 22: Rad-Anbindungsstellen
- 24: Deichsel
- 26: Buggyrad
- 28: Schiebegriff
- 30: Radabweiser
- 32: oberer Bereich
- 34: Schutzelement
- 36: Grundkörper
- 38: Oberschale
- 40: Unterschale
- 42: Seite
- 44: Abstützfläche
- 46: Abstützfläche
- 48: erstes Leuchtmittel (Rücklicht)
- 50: zweites Leuchtmittel (Vorderlicht)
- 52: Vertiefung
- 54: Vertiefung
- 56: vorderseitiger Austrittsbereich
- 58: Reflektor
- 60: Schalter
- 62: Seite
- 64: Aussparung
- 66: Schnellkupplung
- 68: Schiene
- 70: Aussparung
- 72: LED
- 74: erstes Kind
- 76: zweites Kind
- 78: Gurtsystem
- 80: Bezug
- 82: Seitenwand
- 84: Boden

## Patentansprüche

1. Fahrradanhänger mit einem Rahmen (12) umfassend ein rechtes Rahmenelement und ein linkes Rahmenelement und mehrere, das rechte Rahmenelement und das linke Rahmenelement verbindende Querstreben (16), wobei zwischen dem rechten Rahmenelement und dem linken Rahmenelement ein Transportraum (18) mit mindestens einem Sitzelement für ein Kind ausgebildet ist, wobei
in einem oberen Bereich (32) des rechten Rahmenelements und/oder in einem oberen Bereich (32) des linken Rahmenelements ein sich in Fahrzeugquerrichtung nach außen erstreckendes Schutzelement (34) vorgesehen ist, wobei
das Schutzelement (34) gegenüber einer im Bereich des rechten Rahmenelements und/oder linken Rahmenelements verlaufenden Seitenwand (82) hervorragt, wobei die Seitenwand (82) durch einen Bezug (80) gebildet ist, der zumindest teilweise innerhalb des Rahmens (12) aufgespannt ist,
**dadurch gekennzeichnet,**
**dass** die Materialspannung des Bezuges (80) ausreichend groß gewählt ist, um in Verbindung mit dem nach außen gegenüber dem Seitenrahmenelement (14a, 14b) herausragenden und sich auf dem Boden (84) abstützenden Schutzelement (34) zu verhindern, dass der Kopf eines in dem Transportraum befindlichen Kindes (74) in einem umgekippten Zustand des Fahrradanhängers (10) mit dem Boden (84) in Kontakt gerät.

2. Fahrradanhänger nach dem vorstehenden Anspruch, **dadurch gekennzeichnet, dass** der Transportraum (18) zumindest teilweise von dem Bezug (80) umschlossen ist.

3. Fahrradanhänger nach einem der vorstehenden Ansprüche, **dadurch gekennzeichnet, dass** der Rahmen (12) einen sich überwiegend in Fahrzeuglängsrichtung und in Fahrzeughochrichtung ersteckenden, geschlossenen rechten Seitenrahmen (14a) und einen sich überwiegend in Fahrzeuglängsrichtung und in Fahrzeughochrichtung erstreckenden, geschlossenen linken Seitenrahmen (14b) aufweist, wobei das mindestens eine Schutzelement (34) in einem den Transportraum (18) in einem oberen Bereich (32) begrenzenden Abschnitt des linken Seitenrahmens (14b) und/oder in einem den Transportraum (18) in einem oberen Bereich (32) des rechten Seitenrahmens (14a) begrenzenden Abschnitt angeordnet ist.

4. Fahrradanhänger nach einem der vorstehenden Ansprüche, **dadurch gekennzeichnet, dass** das Schutzelement (34) an einer nach außen gerichteten Seite eine sich überwiegend in Fahrzeuglängsrichtung und in Fahrzeughochrichtung erstreckende Abstützfläche (44, 46) aufweist.

5. Fahrradanhänger nach einem der vorstehenden Ansprüche, **dadurch gekennzeichnet, dass** das Schutzelement in Fahrzeuglängsrichtung betrachtet auf Höhe eines im Transportraum angeordneten Sitzelements und/oder in einem in Fahrzeuglängsrichtung betrachtet mittleren Abschnitt des Fahrzeugs vorgesehen ist.

6. Fahrradanhänger nach einem der vorstehenden Ansprüche, **dadurch gekennzeichnet, dass** in dem Schutzelement (34) mindestens ein Leuchtmittel (48, 50) angeordnet ist.

7. Fahrradanhänger nach einem der vorstehenden Ansprüche, **dadurch gekennzeichnet, dass** das Schutzelement (34) zumindest teilweise durch ein separates Element mit einem Grundkörper (36) gebildet ist, das mit dem rechten Rahmenelement und/oder mit dem linken Rahmenelement verbindbar ist.

8. Fahrradanhänger nach dem vorstehenden Anspruch 7, **dadurch gekennzeichnet, dass**
a) eine Schnellkupplung (66, 70) an dem Grundkörper (36) ausgebildet ist und eine komplementär ausgebildete Schnellkupplung (66, 68) an dem rechten Rahmenelement und/oder linken Rahmenelement vorgesehen ist und/oder
b) ein Leuchtmittel (48, 50) und/oder ein Energiespeicher für ein Leuchtmittel (48, 50) herausnehmbar in einem Hohlraum des Schutzelements (34) angeordnet ist.

9. Fahrradanhänger nach einem der drei vorstehenden Ansprüche 6 bis 8, **dadurch gekennzeichnet, dass** an dem Schutzelement (34) eine Schnittstelle zum elektrischen Aufladen einer funktional mit dem Leuchtmittel (48, 50) verbundenen Energiequelle ausgebildet ist.

10. Fahrradanhänger nach Anspruch 8 oder nach den beiden vorstehenden Ansprüche 8 und 9, **dadurch gekennzeichnet, dass** an einem in dem Hohlraum des Grundkörpers (36) eingesetzten Leuchtmittel (48, 50) und/oder einem in dem Hohlraum eingesetzten Energiespeicher eine Schnittstelle zum elektrischen Aufladen einer funktional mit dem Leuchtmittel (48, 50) verbundenen Energiequelle ausgebildet ist.

11. Fahrradanhänger nach einem der vorstehenden Ansprüche, **dadurch gekennzeichnet, dass** das Schutzelement (34) gegenüber dem rechten Rahmenelement und/oder dem linken Rahmenelement seitlich nach außen und nach oben insoweit hervorragend angeordnet ist, dass es zumindest teilweise gegenüber einer Deckfläche des Transportraums (18) hervorragt.

## Claims

1. A trailer for bicycles with a frame (12) comprising a right frame element and a left frame element and several cross-members (16) connecting the right frame element and the left frame element, wherein a transport space (18) with at least one seat element for a child is provided between the right frame element and the left frame element, wherein
a protection element (34) extending outwardly in the transverse direction of the vehicle is provided in an upper part (32) of the right frame element and/or in an upper part (32) of the left frame element, wherein
the protection element (34) protrudes against a side wall (82) extending in the area of the right frame element and/or the left frame element, wherein the side wall (82) is formed by a cover (80) that is stretched within the frame (12) at least partially,
**characterised in that**
the material tension of the cover (80) is chosen sufficiently large to protect, in combination with the protection element (34) protruding outwardly against the side frame element (14a, 14b) and supporting on the ground (84), the head of a child (74) that is present in the transport space from contacting the ground (84) in an overturned state of the trailer (10) for bicycles.

2. The trailer for bicycles according to the preceding claim, **characterised in that** the transport space (18) is enclosed by the cover (80) at least partially.

3. The trailer for bicycles according to any one of the preceding claims, **characterised in that** the frame (12) is provided with a closed right side frame (14a) extending predominantly in the longitudinal direction of the vehicle and in the vertical direction of the vehicle and a closed left side frame (14b) extending predominantly in the longitudinal direction of the vehicle and in the vertical direction of the vehicle, wherein the at least one protection element (34) is arranged in a portion of the left side frame (14b) limiting the transport space (18) in an upper area (32) and/or in a portion limiting the transport space (18) in an upper area (32) of the right side frame (14a).

4. The trailer for bicycles according to any one of the preceding claims, **characterised in that** the protection element (34) has a support surface (44, 46) extending predominantly in the longitudinal direction of the vehicle and in the vertical direction of the vehicle on a side facing outward.

5. The trailer for bicycles according to any one of the preceding claims, **characterised in that** the protection element is provided at the level of a seat element arranged in the transport space when viewed in the longitudinal direction of the vehicle and/or in a middle portion of the vehicle when viewed in the longitudinal direction of the vehicle.

6. The trailer for bicycles according to any one of the preceding claims, **characterised in that** at least one lighting means (48, 50) is arranged in the protection element (34).

7. The trailer for bicycles according to any one of the preceding claims, **characterised in that** the protection element (34) is at least partially formed by a separate element with a main body (36) that is connectable to the right frame element and/or the left frame element.

8. The trailer for bicycles according to the preceding claim 7, **characterised in that**
a) a quick coupler (66, 70) is provided at the main body (36) and a complementarily shaped quick coupler (66, 68) is provided at the right frame element and/or the left frame element, and/or
b) a lighting means (48, 50) and/or an energy store for a lighting means (48, 50) is arranged in a cavity of the protection element (34) in a removable manner.

9. The trailer for bicycles according to any one of the three preceding claims 6 to 8, **characterised in that** an interface for electrically charging a source of energy operatively connected to the lighting means (48, 50) is provided at the protection element (34).

10. The trailer for bicycles according to claim 8 or according to the two preceding claims 8 and 9, **characterised in that** an interface for electrically charging a source of energy operatively connected to the lighting means (48, 50) is provided at a lighting means (48, 50) inserted in the cavity of the main body (36) and/or at an energy store inserted in the cavity.

11. The trailer for bicycles according to any preceding claim, **characterised in that** the protection element (34) is arranged laterally outwardly and upward opposite to the right frame element and/or the left frame element in a protruding manner to the extent that it protrudes at least partially against a cover surface of the transport space (18).

## Revendications

1. Remorque de bicyclette avec un cadre (12) comprenant un élément de cadre droit et un élément de cadre gauche et plusieurs entretoises transver-sales (16) reliant l'élément de cadre droit et l'élément de cadre gauche, dans lequel un espace de transport (18) avec au moins un élément d'assise pour un enfant est formé entre l'élément de cadre droit et l'élément de cadre gauche, dans lequel
un élément de protection (34) s'étendant vers l'extérieur dans le sens trans-versal du véhicule est prévu dans une région supérieure (32) de l'élément de cadre droit et/ou dans une région supérieure (32) de l'élément de cadre gauche, dans lequel
l'élément de protection (34) fait saillie par rapport à une paroi latérale (82) s'étendant dans la région de l'élément de cadre droit et/ou de l'élément de cadre gauche, dans lequel la paroi latérale (82) est formée d'une garniture (80) tendue au moins partiellement à l'intérieur du cadre (12),
**caractérisée en ce que**,
la tension matérielle de la garniture (80) est choisie de manière à être suffisamment grande pour empêcher, en liaison avec l'élément de protection (34) faisant saillie vers l'extérieur par rapport à l'élément de cadre latéral (14a, 14b) et s'appuyant sur le sol (84), que la tête d'un enfant (74) se trouvant dans l'espace de transport vienne en contact avec le sol (84) dans un état basculé de la remorque de bicyclette (10).

2. Remorque de bicyclette selon la revendication précédente, **caractérisée en ce que** l'espace de transport (18) est au moins partiellement entouré par la garniture (80).

3. Remorque de bicyclette selon l'une quelconque des revendications précédentes, **caractérisée en ce que** le cadre (12) présente un cadre latéral droit (14a) fermé s'étendant principalement dans le sens longitudinal du véhicule et dans le sens vertical di véhicule et un cadre latéral gauche (14b) fermé s'étendant principalement dans le sens longitudinal du véhicule et dans le sens vertical du véhicule, dans lequel le au moins un élément de protection (34) est agencé dans une section du cadre latéral gauche (14b) délimitant l'espace de transport (18) dans une région supérieure (32) et/ou dans une section délimitant l'espace de transport (18) dans une région supérieure (32) du cadre latéral droit (14a).

4. Remorque de bicyclette selon l'une quelconque des revendications précédentes, **caractérisée en ce que** l'élément de protection (34) présente, au niveau d'un côté dirigé vers l'extérieur, une surface d'appui (44, 46) s'étendant principalement dans le sens longitudinal du véhicule et dans le sens vertical du véhicule.

5. Remorque de bicyclette selon l'une quelconque des revendications précédentes, **caractérisée en ce que** l'élément de protection, vu dans le sens longitudinal du véhicule, est prévu à hauteur d'un élément d'assise agencé dans l'espace de transport et/ou dans une section centrale du véhicule, vue dans le sens longitudinal du véhicule.

6. Remorque de bicyclette selon l'une quelconque des revendications précédentes, **caractérisée en ce qu'**au moins une source lumineuse (48, 50) est agencée dans l'élément de protection (34).

7. Remorque de bicyclette selon l'une quelconque des revendications précédentes, **caractérisée en ce que** l'élément de protection (34) est au moins partiellement formé d'un élément séparé pouvant être relié à l'élément de cadre droit et/ou à l'élément de cadre gauche et muni d'un corps de base (36).

8. Remorque de bicyclette selon la revendication 7, **caractérisée en ce que**
a) une attache rapide (66, 70) est formée au niveau du corps de base (36) et une attache rapide (66, 68) complémentaire est prévue au niveau de l'élément de cadre droit et/ou de l'élément de cadre gauche et/ou
b) une source lumineuse (48, 50) et/ou un accumulateur d'énergie destiné à une source lumineuse (48, 50) est agencé de manière amovible dans une cavité de l'élément de protection (34).

9. Remorque de bicyclette selon l'une quelconque des revendications 6 à 8, **caractérisée en ce qu'**une interface permettant de charger électriquement une source d'énergie reliée de manière fonctionnelle à la source lumineuse (48, 50) est formée au niveau de l'élément de protection (34).

10. Remorque de bicyclette selon la revendication 8 ou selon les revendications 8 et 9, **caractérisée en ce qu'**une interface permettant de charger électriquement une source d'énergie reliée de manière fonctionnelle à la source lumineuse (48, 50) est formée au niveau d'une source lumineuse (48, 50) insérée dans la cavité du corps de base (36) et/ou au niveau d'un accumulateur d'énergie inséré dans la cavité.

11. Remorque de bicyclette selon l'une quelconque des revendications précédentes, **caractérisée en ce que** l'élément de protection (34) est agencé vers l'extérieur latéralement par rapport à l'élément de cadre droit et/ou l'élément de cadre gauche et est agencé de manière saillante vers le haut jusqu'à faire saillie au moins partiellement par rapport à une surface supérieure de l'espace de transport (18).
